# EUROPEAN PATENT APPLICATION

(11) **EP 4 250 802 A1**
(43) Date of publication of application: **27.09.2023**
(21) Application number: 22172327.3
(22) Date of filing: 09.05.2022
(51) Int. Cl.: H04W 24/02, H04W 16/18, H04W 88/08

(54) **OPTIMIZING PHYSICAL CELL ID ASSIGNMENT IN A WIRELESS COMMUNICATION NETWORK**

(30) Priority: 23.03.2022 US 202217702509
(71) Applicant: Sterlite Technologies Limited, Haryana 122002 (IN)
(72) Inventor: Shankaranarayanan, N.K., 122002 Gurugram (IN); Puthenpura, Sarat, 122002 Gurugram (IN); Parekh, Shyam, Orinda, 94563 (US); Tang, Kevin, Dublin, 94568 (US); Kumar, Abhishek, 122002 Gurugram (IN)
(74) Representative: Sach, Greg Robert

(57) **Abstract**

The present disclosure relates a system and a method for optimizing Physical Cell ID (PCI) assignment in a wireless communication network such as an Open-Radio Access Network (O-RAN) (100). The method includes deploying an optimization service in an rApp (104) and registering the optimization service as a PCI-rApp within a Service Management and Orchestration Framework (SMO) (102), assigning a listing of unique predefined PCIs to operating cells of a selected range after satisfying one or more constraints and concluding that the procedure has been successful if the assignment of the PCI to each operating cell completes without using more than the listing of unique predefined PCIs.

## Description

### TECHNICAL FIELD

Embodiments of the present disclosure relate to the field of wireless communication networks, and more particularly, relates to a system for optimizing Physical Cell ID (PCI) assignment in a wireless communication network and a method thereof.

### Background Art

Wireless communication systems are rapidly growing in usage. In recent years, wireless devices such as smartphones and tablet computers have become increasingly sophisticated. In addition to supporting telephone calls, many mobile devices now provide access to the internet, email, text messaging, and navigation using the global positioning system (GPS), and are capable of operating sophisticated applications that utilize these functionalities.

With advancements in technologies, the new proposed telecommunications standard moving beyond the current International Mobile Telecommunications-Advanced (IMT-Advanced) Standards is called 5th generation mobile networks or 5th generation wireless systems, or 5G for short (otherwise known as 5G-NR for 5G New Radio, also simply referred to as NR). Particularly, the 5G-NR proposes a higher capacity for a higher density of mobile broadband users, also supporting device-to-device, ultra-reliable, and massive machine communications, as well as lower latency and lower battery consumption, than current LTE standards. Further, the 5G-NR standard may allow for less restrictive UE scheduling as compared to current LTE standards. Consequently, efforts are being made in ongoing developments of 5G-NR to take advantage of the less restrictive UE scheduling in order to further leverage power savings opportunities.

In 5G deployments, each 5G New Radio (NR) cell corresponds to a Physical cell ID (PCI). The PCI is a cell identifier in a physical layer that is used to scramble data to allow user equipment (UEs) to separate information from different base stations or to differentiate cells. However, a UE cannot differentiate between two cells if both have the same PCI and frequency bands, resulting in PCI conflicts such as PCI confusion and PCI collision. In the former, if two neighbour cells have the same PCI, a serving cell will not be able to identify a target cell on receiving a report for handover purposes and in the later, the UE located in a common coverage of two cells may not be able to decode channels of a serving base station.

For the same, confusion-free and collision-free PCI planning is necessary. Poor or erroneous planning may affect synchronization procedure, demodulation, handover signalling, for example and ultimately degrade network performance. To be precise, for PCI collision avoidance, two neighbour cells must have different PCIs and for PCI confusion avoidance, two neighbour cells of one cell, i.e., the serving cell, must have different PCIs. Further, two neighbour cells should have different PCI modulo 3, 4 and 30.

US patent application US20200120724A1 discloses an apparatus and methods for physical cell identification within one or more wireless networks. Particularly, this functionality is provided by specifying one or more mobility-related parameters associated with various UE, such that serving gNBs can determine whether a given UE requires a mobility context, and as such whether it should conduct subsequent RF measurement reporting to report back potential conflicts in PCI it may encounter to the gNB. Alternatively, the measurement reporting is configured to comply with 5G NR-U required "listen-before-talk" or LBT protocols; i.e., to measure parameters consistent with the LBT protocols to detect any such PCI-based conflicts.

Spanish patent application ES2813528T3 discloses self-organizing network function interaction. In particular, the method, by means of a high-level Self Organization Network function, SON includes steps of receiving, from the two or more lower-level SON functions, information about the network conditions or the subscriber's activity, including the identity information of the two or more lower-level SON functions and any network optimization actions performed by the two or more lower-level SON functions; analyze the information received from the two or more lower-level SON functions, including consideration of distributed load balancing actions performed by the lower-level SON functions; and perform one or more centralized load balancing actions to optimize the network in response to information analysis, where the high-level SON function is located in a Network Manager, NM, and operates to optimize the overall network, and the two or more lower level SON functions are located in each Network Element, NE, to locally optimize the NE under the control and direction of the higher level SON function.

While the prior arts cover various solutions for optimizing Physical Cell ID (PCI) assignment, however, these solutions are not scalable and robust and are trapped in a local minima as they are based on neighbour cell relations, thereby resulting in handover failures, delayed downlink synchronization, high Block Error Rate (BLER), decoding failure of physical channels, for example. Moreover, improving communication capacity, speed, flexibility and/or efficiency may present certain problems. Accordingly, to overcome the disadvantages of the prior art, there is an urgent need for a technical solution that overcomes the above stated limitations in the prior arts the present disclosure focuses on providing a system for optimizing Physical Cell ID (PCI) assignment in a wireless communication network and a method thereof.

### SUMMARY OF THE DISCLOSURE

Embodiments of the present disclosure provide a method for optimizing Physical Cell ID (PCI) assignment in an Open Radio Access Network (O-RAN). In particular, the method comprises the steps of deploying an optimization service in an rApp and registering the optimization service as a PCI-rApp within a Service Management and Orchestration Framework (SMO), and assigning a listing of unique predefined PCIs (Physical Cell IDs) to operating cells of a selected range after satisfying one or more constraints. Moreover, the operating cells have neighbour relations. Furthermore, the rApp is in connection with a Non-Real Time RAN Intelligent Controller (Non-RT-RIC) through an interface. Further, the method determines an assigning procedure is successful if an assignment of the PCI to each operating cell completes without using more than the listing of unique predefined PCIs.

According to a first aspect of the present disclosure, the PCI assignment and/or reassignment is executed by the rApp hosted by the Non-Real Time RAN Intelligent Controller (Non-RT-RIC) in the Open-Radio Access Network (O-RAN). Particularly, the PCI assignment and/or reassignment takes one or more inputs selected from the FM, cell addition (single or multiple) or any other neighbour relation.

According to a second aspect of the present disclosure, when any fault is detected or notified from any of the selected range the rApp performs steps of identifying a cluster of operating cells around an operating cell generating a fault message, and re-assigning the listing of unique predefined PCIs to the cluster of operating cells, representing a faulty cluster, based on the one or more constraints. In particular, the one or more constraints are a collision, a confusion, and a modulo 3/30 non-overlap between neighbours, and a minimum PCI-reuse distance.

According to a third aspect of the present disclosure, the method comprises getting data updates, fault supervision and network configuration via an O1 interface for the Open-Radio Access Network (O-RAN). In particular, the O1 interface links the Service Management and Orchestration Framework (SMO) to an E2 node.

In accordance with an embodiment of the present disclosure, the E2 node creates a measurement job and the Service Management and Orchestration Framework (SMO) subscribes to at least one of a Fault management (FM), a Configuration management (CM), a Performance management (PM) data from the E2 node. Particularly, the E2 node executes configuration and sends CM change confirmation to the rApp. Moreover, the E2 node comprises an Open-Distributed Unit (O-DU) and an Open-Centralized Unit (O-CU).

According to the fourth aspect of the disclosure, the method comprises using an O1 interface for the Open-Radio Access Network (O-RAN) to get data updates, fault supervision and network configuration. In particular, the O1 interface links the Service Management and Orchestration Framework (SMO) to an O1 interface adapter which links to an E2 node.The E2 node is configured to create a measurement job and the Service Management and Orchestration Framework (SMO) subscribe is configured to at least one of a Fault management (FM), a Configuration management (CM), a Performance management (PM) data from the E2 node.

According to the fifth aspect of the disclosure, the rApp comprises a Physical Cell ID (PCI) optimizer, at least one processor and/or controller, a connector, and a storage unit. In particular, the Physical Cell ID (PCI) optimizer is configured to deploy an optimization service in the rApp and register the optimization service as a PCI-rApp within the Service Management and Orchestration Framework (SMO). Moreover, at least one processor and/or controller is configured to control a series of processes for the rApp. Further, the connector is configured to connect the rApp with other elements to perform message transmission and reception. And, the storage unit is configured to store one or more programs and data for operation of the rApp.

In accordance with an embodiment of the present disclosure, rApp consumes network data having CM notification of new cell deployment or neighbour relation change, FM about PCI conflict(s) and PM. Particularly, the rApp determines a PCI for newly deployed cell or PCI changes to resolve flagged PCI conflicts.

In an aspect of the present disclosure, the method implements techniques for PCI assignments such as complete (re-)assignment, incremental assignment and fault management induced local re-assignment.

In another aspect of the present disclosure, the method further executes optimal PCI assignment by an rApp hosted by a Non-Real-Time Radio Access Network Intelligent Controller (non-RT-RIC) in an O-RAN (Open Radio Access Network) compliant architecture at the time of a cell activation or cell topology/configuration change and/or upon receiving a fault management message/notification due to a PCI conflict such as PCI collision and/or PCI confusion.

According to the foregoing solutions, the objectives of the present disclosure are attained by employing a method for optimizing Physical Cell ID (PCI) assignment in a wireless communication network.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.
Fig. 1 is a block diagram illustrating an Open-Radio Access Network (O-RAN) in accordance with an embodiment of the present disclosure;
Fig 2A is a sequence diagram illustrating optimizing Physical Cell ID (PCI) assignment in the Open-Radio Access Network (O-RAN) in accordance with an embodiment of the present disclosure;
Fig. 2B is a flow diagram illustrating optimized PCI assignment and reassignment techniques in accordance with an embodiment of the present disclosure;
Fig. 3 is a block diagram illustrating various hardware components of an rApp for optimizing the PCI assignment in accordance with an embodiment of the present disclosure; and
Fig. 4 is a flowchart illustrating a method for optimizing the PCI assignment in accordance with an embodiment of the present disclosure.

### REFERENCE LIST

Open-Radio Access Network (O-RAN) - 100
Service Management and Orchestration Framework (SMO) - 102
rApp - 104
Non-Real Time RAN Intelligent Controller (Non-RT-RIC) - 106
Near-Real Time RAN Intelligent Controller (Near-RT-RIC) - 108
E2 node - 110
Open Cloud (O-Cloud) - 112
Database - 114
Physical Cell ID (PCI) optimizer - 302
Controller - 304
Connector - 306
Storage unit - 308

The physical Cell ID (PCI) assignment in the Open-Radio Access Network (O-RAN) illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

**Following terms shall apply throughout the present disclosure:**
Active bearer: An active bearer corresponds to tunnel connections between the UE and a packet data network gateway to provide a service.
QoS Class identifier (QCI): QCI level corresponds to a QoS value required by an active bearer in the UE to provide the service.
gNB: New Radio (NR) Base stations which have capability to interface with 5G Core named as NG-CN over NG-C/U (NG2/NG3) interface as well as 4G Core known as Evolved Packet Core (EPC) over S1-C/U interface.
LTE eNB: An LTE eNB is an evolved eNodeB that can support connectivity to EPC as well as NG-CN.
Non-standalone NR: It is a 5G Network deployment configuration, where a gNB needs an LTE eNodeB as an anchor for control plane connectivity to 4G EPC or LTE eNB as anchor for control plane connectivity to NG-CN.
Standalone NR: It is a 5G Network deployment configuration where gNB does not need any assistance for connectivity to core Network, it can connect by its own to NG-CN over NG2 and NG3 interfaces.
Non-standalone E-UTRA: It is a 5G Network deployment configuration where the LTE eNB requires a gNB as anchor for control plane connectivity to NG-CN.
Standalone E-UTRA: It is a typical 4G network deployment where a 4G LTE eNB connects to EPC.
Xn Interface: It is a logical interface which interconnects the New RAN nodes i.e., it interconnects gNB to gNB and LTE eNB to gNB and vice versa.
Reference signal received power (RSRP): RSRP may be defined as the linear average over the power contributions (in [W]) of the resource elements that carry cell-specific reference signals within the considered measurement frequency bandwidth." RSRP may be the power of the LTE Reference Signals spread over the full bandwidth and narrowband.

Radio access network (RAN)- RAN is a part of a telecommunications system which connects individual devices to other parts of a network through radio connections that provides a connection of user equipment (UE) such as mobile phone or computer with a core network of the telecommunication systems. The RAN is an essential part of the access layer in the telecommunication systems which utilizes base stations (such as e node B, g node B) for establishing radio connections.

Terms Service Management and Orchestrator (SMO) and Service Management and Orchestration Framework can be used interchangeably for convenience.

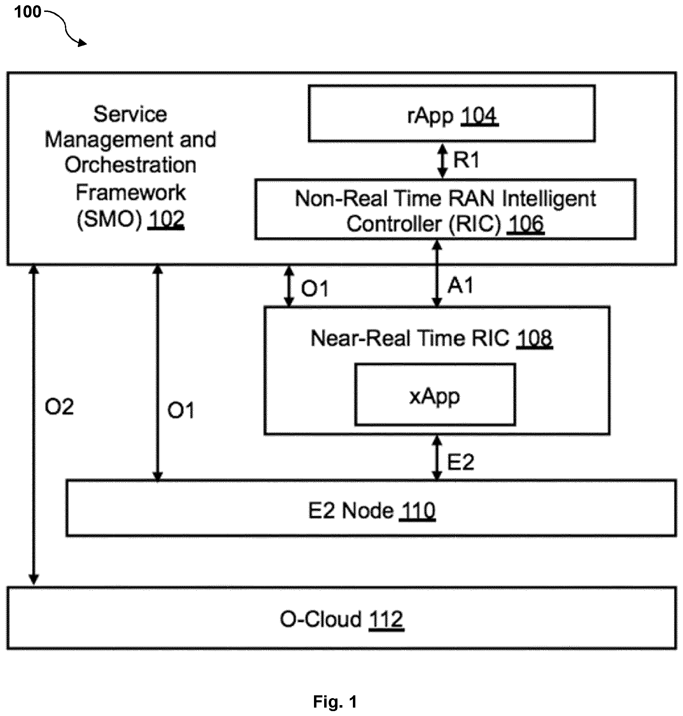

Fig. 1 is a block diagram illustrating an Open-Radio Access Network (O-RAN) (100) in accordance with an embodiment of the present disclosure. The Open-Radio Access Network (O-RAN) (100) is an evolved version of prior radio access networks, making the prior radio access networks more open and smarter than previous generations. And, the Open-Radio Access Network (O-RAN) (100) provides real-time analytics that drive embedded machine learning systems and artificial intelligence back end modules to empower network intelligence. Moreover, the Open-Radio Access Network (O-RAN) (100) includes virtualized network elements with open and standardized interfaces. The open interfaces are essential to enable smaller vendors and operators to quickly introduce their own services, or enable operators to customize the network to suit their own unique needs. Further, the Open interfaces also enable multi-vendor deployments, enabling a more competitive and vibrant supplier ecosystem. Similarly, open-source software and hardware reference designs enable faster, more democratic and permission less innovation. Further, the Open-Radio Access Network (O-RAN) (100) introduces a self-driving network by utilizing new learning-based technologies to automate operational network functions. These learning-based technologies make the Open-Radio Access Network (O-RAN) (100) intelligent. Embedded intelligence, applied at both component and network levels, enables dynamic local radio resource allocation and optimizes network wide efficiency. In combination with Open-Radio Access Network (O-RAN) (100) open interfaces, AI-optimized closed-loop automation is a new era for network operations.

In accordance with an embodiment of the present disclosure, the Open-Radio Access Network (O-RAN) (100) includes a Service Management and Orchestrator (SMO) (102), a Near-Real Time RAN Intelligent Controller (Near-RT-RIC) (108), an E2 node (110) and an Open Cloud (O-Cloud) (112). Particularly, the Service Management and Orchestration Framework (SMO) (102) is configured to provide Service Management and Orchestration Framework (SMO) (102) functions/services such as data collection and provisioning services of the Open-Radio Access Network (O-RAN) (100). The data collection of the Service Management and Orchestration Framework (SMO) (102) may include but not limited to, data related to a bandwidth of a wireless communication network and at least one of a plurality of user equipment (not shown in Fig.1). Moreover, the Service Management and Orchestration Framework (SMO) (102) oversees all the orchestration aspects, management and automation of Open-Radio Access Network (O-RAN) (100) elements and resources and supports O1, A1 and O2 interfaces. Further, the Service Management and Orchestration Framework (SMO) (102) logically terminates the O1 and O2 interface.

In accordance with an embodiment of the present disclosure, the Non-Real Time RAN Intelligent Controller (Non-RT-RIC) (106) resides in the Service Management and Orchestration Framework (SMO) (102) connected via various internal interfaces. It includes a Non-Real Time RAN Intelligent Controller (Non-RT-RIC) Application such as rApp (104) connected/integrated via an R1 interface. In particular, rApp (104) is a modular microservice and an independent software plug-in to the Non-Real Time RAN Intelligent Controller (Non-RT-RIC) (106) deployed to provide functional extensibility to the Open-Radio Access Network (O-RAN) (100) by third parties. Thus, the Non-Real Time RAN Intelligent Controller (Non-RT-RIC) (106) provides different functionalities by using programmable modules as rApps (104), from different operators and vendors. Alternatively, the Non-Real Time RAN Intelligent Controller (Non-RT-RIC) (106) may have one or more rApps (104). Further, the services delivered by the Non-Real Time RAN Intelligent Controller (Non-RT-RIC) (106) are composed of the rApps (104). Subsequently, the Non-Real Time RAN Intelligent Controller (Non-RT-RIC) (106), the rApps (104) are designed to provide granular service assurance and may improve the quality-of-experience wherever needed.

Particularly, the Non-Real Time RAN Intelligent Controller (Non-RT-RIC) (106) is a logical function that enables non-real-time control and optimization of the Open-Radio Access Network (O-RAN) (100) elements and resources, AI/ML workflow including but not limited to model training and updates, and policy-based guidance of applications/features in the Near-Real Time RAN Intelligent Controller (Near-RT-RIC) (108) using the rApps (104). Moreover, the Non-Real Time RAN Intelligent Controller (Non-RT-RIC) (106) communicates to the Near-Real Time RAN Intelligent Controller (Near-RT-RIC) (108) using the A1 interface. Further, the Non-Real Time RAN Intelligent Controller (Non-RT-RIC) (106) logically terminates the A1 interface.

In accordance with an embodiment of the present disclosure, the Near-Real Time RAN Intelligent Controller (Near-RT-RIC) (108) is a logical function enabling near-real-time control and optimization of the Open-Radio Access Network (O-RAN) (100) elements and resources such as the E2 node (110) via fine-grained data collection and actions over the E2 interface. in particular. the Near-Real Time RAN Intelligent Controller (Near-RT-RIC) (108) controls over the E2 node (110) using the policies and the enrichment data provided via A1 interface from the Non-Real Time RAN Intelligent Controller (Non-RT-RIC) (106).

In accordance with an embodiment of the present disclosure, the Non-Real Time (Non-RT) control functionality (> 1s) and Near-Real Time (Near-RT) control functions (< 1s) are decoupled in an RIC (RAN Intelligent Controller). Particularly, the Non-RT functions include but are not limited to, service and policy management, RAN analytics and model-training for some of the Near-Real Time RAN Intelligent Controller (Near-RT-RIC) functionality, and Non-Real Time RAN Intelligent Controller (Non-RT-RIC) optimization.

The Near-Real Time RAN Intelligent Controller (Near-RT-RIC) (108) may host one or more xApps using E2 interface to collect near real-time information and provide value added services. xAPP is an independent software plug-in to the Near-Real Time RAN Intelligent Controller (Near-RT-RIC) (108) to provide functional extensibility to the RAN by third parties. The Near-Real Time RAN Intelligent Controller (Near-RT-RIC) (108) may be provided with different functionalities by using programmable modules as xAPPs, from different operators and vendors.

Further, the Near-Real Time RAN Intelligent Controller (Near-RT-RIC) (108) connects to the E2 node (110) over the E2 interface. In particular, the E2 node (110) is composed of an Open Central Unit (O-CU), an Open Distributed Unit (O-DU) and an Open Radio Unit (O-RU). Moreover, the O-CU is a logical node hosting RRC (Radio Resource Control), SDAP (Service Data Adaptation Protocol) and PDCP (Packet Data Convergence Protocol). Further, the O-CU may be a disaggregated O-CU and may include two sub-components: Open Central Unit Control Plane (O-CU-CP) and Open Central Unit User Plane (O-CU-UP). The O-CU-CP is a logical node hosting the RRC and the control plane part of the PDCP. Subsequently, the O-CU-CP supports O1, E2, F1-c, E1, X2-c, Xn-c and NG-c interfaces for interaction with other components/entities. Similarly, the O-CU-UP is a logical node hosting the user plane part of the PDCP and the SDAP and uses O1, E1, E2, F1-u, X2-u, NG-u and Xn-u interfaces.

In accordance with an embodiment of the present disclosure, the O-DU is a logical node hosting RLC/MAC (Medium access control)/High-PHY layers based on a lower layer functional split and supports O1, E2, F1-c, F1-u, OFH CUS-Plane and OFH M-Plane interfaces. Particularly, the O-RU is a logical node hosting Low-PHY layer and RF (Radio Frequency) processing based on a lower layer functional split. This is similar to 3GPP's "TRP (Transmission And Reception Point)" or "RRH (Remote Radio Head)" but more specific in including the Low-PHY layer (FFT/iFFT, PRACH (Physical Random Access Channel) extraction). The O-RU utilizes OFH CUS-Plane and OFH M-Plane interfaces.

The Open Cloud (O-Cloud) (112) is a collection of physical RAN nodes (that host various RICs, CUs, and DUs), software components (such as operating systems and runtime environments) and the Service Management and Orchestration Framework (SMO) (102), where the Service Management and Orchestration Framework (SMO) (102) manages and orchestrates the Open Cloud (O-Cloud) (112) from within via O2 interface.

In accordance with an embodiment of the present disclosure, the O1 interface is element operations and management interface between management entities in the Service Management and Orchestration Framework (SMO) (102) and Open-Radio Access Network (O-RAN) (100) managed elements, for operation and management, by which FCAPS (fault, configuration, accounting, performance, security) management, Software management, File management shall be achieved. Particularly, the Open-Radio Access Network (O-RAN) (100) managed elements include the Near-Real Time RAN Intelligent Controller (Near-RT-RIC) (108) and the E2 node (110). Moreover, the management and orchestration functions are received by the aforesaid Open-Radio Access Network (O-RAN) (100) managed elements via the O1 interface. Subsequently, the Service Management and Orchestration Framework (SMO) (102) in turn receives data from the Open-Radio Access Network (O-RAN) (100) managed elements via the O1 interface for AI (artificial intelligence) model training.

In accordance with an embodiment of the present disclosure, the O2 interface is a cloud management interface, where the Service Management and Orchestration Framework (SMO) (102) communicates with the Open Cloud (O-Cloud) (112) it resides in. Typically, operators that are connected to the Open Cloud (O-Cloud) (112) can then operate and maintain the Open-Radio Access Network (O-RAN) (100) with the O1 or O2 interfaces.

TheA1 interface enables communication between the Non-Real Time RAN Intelligent Controller (Non-RT-RIC) (106) and the Near-Real Time RAN Intelligent Controller (Near-RT-RIC) (108) and supports policy management, machine learning and enrichment information transfer to assist and train AI and machine learning in the Near-Real Time RAN Intelligent Controller (Near-RT-RIC) (108). Additionally, the R1 interface, which is an internal interface to the Service Management and Orchestration Framework (SMO) (102), through which the rApps (104) leverages the functionality exposed to further provide value added services for Open-Radio Access Network (O-RAN) (100) operation, such as driving the A1 interface, generating the enrichment information for the use of other rApp(s), recommending set of actions that may be applied over the O1/O2 interface. Further, the R1 interface supports easy onboarding of the rApps (104).

In accordance with an embodiment of the present disclosure, the Near-Real Time RAN Intelligent Controller (Near-RT-RIC) (108) connects to the E2 node (110) via the E2 interface for data collection. The E2 node (110) can connect only to one Near-Real Time RAN Intelligent Controller (Near-RT-RIC) (108), but one Near-Real Time RAN Intelligent Controller (Near-RT-RIC) (108) can connect to multiple E2 nodes (110). In particular, protocols that go over the E2 interface are control plane protocols that control and optimize the elements of the E2 node (110) and the resources they use.

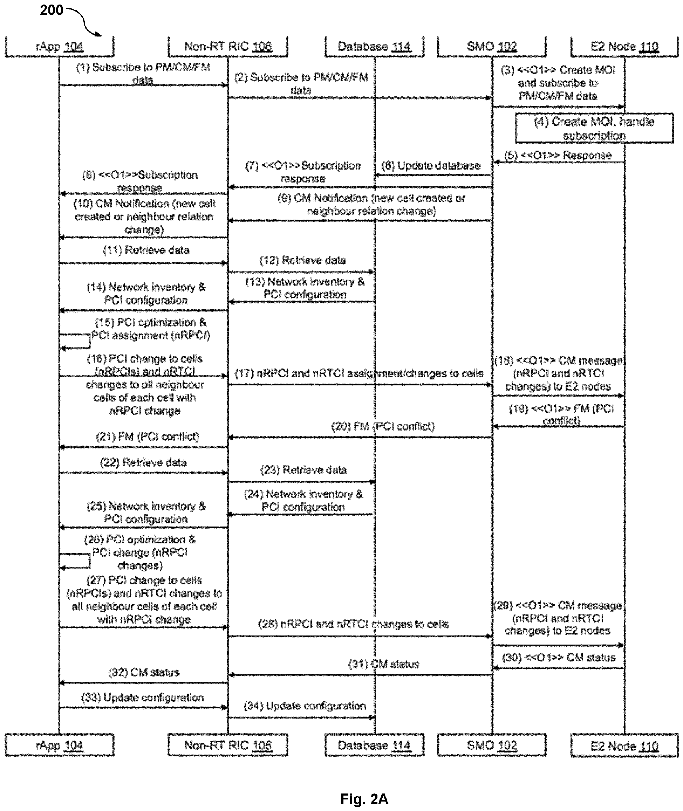

Fig 2A is a sequence diagram illustrating optimizing Physical Cell ID (PCI) assignment in the Open-Radio Access Network (O-RAN) (100) in accordance with an embodiment of the present disclosure. The optimization service for PCI is deployed in the rApp (104) and the rApp (104) with the optimization service (or PCI optimization service) is registered with the Non-Real Time RAN Intelligent Controller (Non-RT-RIC) (106) and thus with the Service Management and Orchestration Framework (SMO) (102). Particularly, the rApp (104) is in connection with the Non-Real Time RAN Intelligent Controller (Non-RT-RIC) (106) using an interface such as the R1 interface. Moreover, the rApp (104) consumes network data having CM notification of new cell deployment or cell(s) with neighbour relation change, FM about PCI conflict(s) and PM and determines a PCI for newly deployed cell or for the cell(s) whose neighbour relation has been changed or determines PCI changes to resolve flagged PCI conflicts. Further, the O1 interface is used for the Open-Radio Access Network (O-RAN) (100) to get data updates, fault supervision and network configuration, wherein the O1 interface links the Service Management and Orchestration Framework (SMO) (102) to an E2 node (110) either directly or via an O1 interface adapter.

In particular, the E2 node (110) creates a measurement job and the Service Management and Orchestration Framework (SMO) (102) subscribes to at least one of a Fault Management (FM), a Configuration Management (CM), a Performance Management (PM) data from the E2 node (110). Moreover, the E2 node (110) includes the O-DU and the O-CU and executes configuration and sends CM change confirmation to the rApp (104).

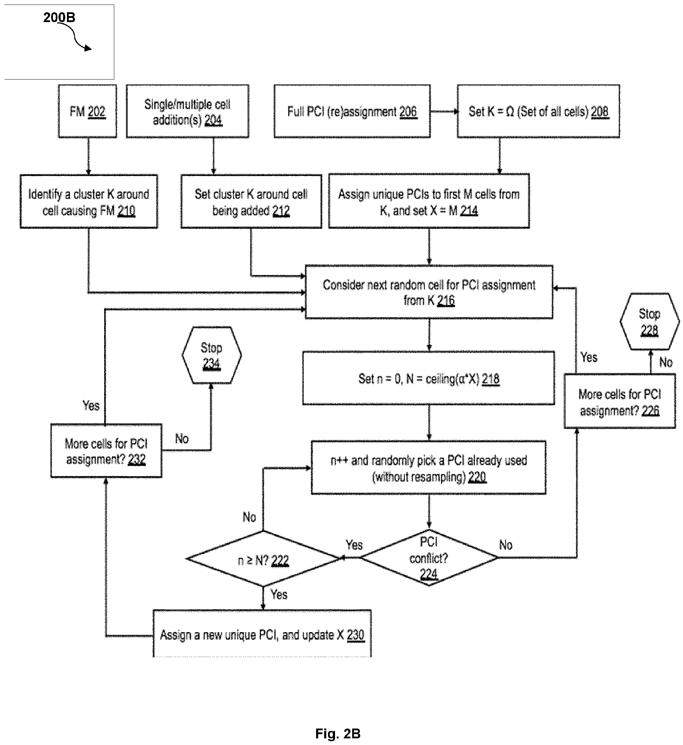

Fig. 2B is a flow diagram illustrating optimized PCI assignment and reassignment techniques in accordance with an embodiment of the present disclosure. The method 200B starts at step 1. At step 1, the rApp (104) sends a subscription request for subscribing to data such as Fault Management (FM)/Configuration Management (CM)/Performance management (PM)) data from the Non-Real Time RAN Intelligent Controller (Non-RT-RIC) (106) via the R1 interface.

At step 2, the Non-Real Time RAN Intelligent Controller (Non-RT-RIC) (106) transmits the subscription request to the Service Management and Orchestration Framework (SMO) (102) via internal interface(s). In turn, the Service Management and Orchestration Framework (SMO) (102), sends the same to the involved E2 node (110) via the O1 interface at step 3.

At step 3, along with the subscription request, the Service Management and Orchestration Framework (SMO) (102) also transmits a request for creating Managed Object Instance (MOI) to the E2 node (110). In particular, the E2 node (110) includes the O-CU/O-DU (as discussed above).

At step 4, the E2 node (110) (O-CU/O-DU) creates the MOI, measurement job and handles the subscription request. At step 5, the E2 node (110) (O-CU/O-DU) sends a (subscription) response to the Service Management and Orchestration Framework (SMO) (102) via the O1 interface.

At step 6, the Service Management and Orchestration Framework (SMO) (102) further instructs database (114) to update the subscription response.

At step 7, Service Management and Orchestration Framework (SMO) (102) simultaneously transmits the subscription response to the Non-Real Time RAN Intelligent Controller (Non-RT-RIC) (106) using the O1 interface. And at step 8, the subscription response is finally sent to the rApp (104).

At step 9, a new cell is created or the neighbour relation of the cell(s) is changed, and the Service Management and Orchestration Framework (SMO) (102) signals CM notification to the Non-Real Time RAN Intelligent Controller (Non-RT-RIC) (106).

At step 10, the Non-Real Time RAN Intelligent Controller (Non-RT-RIC) (106) relays the CM notification regarding new cell creation or neighbour relation change to the rApp (104).

At step 11 and step 12, the rApp (104) sends a query to retrieve data such as PCI configuration, or any other restriction from the database (114) via the Non-Real Time RAN Intelligent Controller (Non-RT-RIC) (106) respectively.

At step 13 and step 14, the database (114) in response transmits network inventory and the PCI configuration to the rApp (104) via the Non-Real Time RAN Intelligent Controller (Non-RT-RIC) (106) respectively.

At step 15, the rApp (104) initiates PCI optimization and PCI assignment (nRPCI) after receiving the data related to the network inventory and the PCI configuration.

In accordance with an embodiment of the present disclosure, at step 16 when PCI optimization is performed, the rApp (104) sends notification to the Non-Real Time RAN Intelligent Controller (Non-RT-RIC) (106) indicating the PCI changes/assignment to the cell(s) (nRPCIs) and nRTCI changes/assignment to all neighbour cells of each cell with nRPCI change.

At step 17, the change is further transmitted to Service Management and Orchestration Framework (SMO) (102).

At step 18, the Service Management and Orchestration Framework (SMO) (102) sends the CM message to the E2 nodes (110) of the new cell (nRPCI) or of the cell(s) with neighbour relation change.

At step 19, the E2 node (110) transmits FM in case of PCI conflict (due to just or previously assigned PCI).

At step 20, the FM with PCI conflict is notified to the Non-Real Time RAN Intelligent Controller (Non-RT-RIC) (106) by the Service Management and Orchestration Framework (SMO) (102).

At step 21, the FM with PCI conflict is further notified to the rApp (104) by the Non-Real Time RAN Intelligent Controller (Non-RT-RIC) (106).

At step 22 and step 23, the rApp (104) sends a query to retrieve data such as PCI configuration, or any other restriction from the database (114) via the Non-Real Time RAN Intelligent Controller (Non-RT-RIC) (106) respectively.

At step 24 and at step 25, the database (114) transmits network inventory and the PCI configuration to the rApp (104) via the Non-Real Time RAN Intelligent Controller (Non-RT-RIC) (106).

At step 26, the rApp (104) performs PCI assignment optimization and PCI change (nRPCI changes) operations.

At step 27, the rApp (104) transmits the PCI change to cells (nRPCIs) and nRTCI changes to all neighbour cells of each cell with nRPCI change to the Non-Real Time RAN Intelligent Controller (Non-RT-RIC) (106).

At step 28, the change is further notified to the Service Management and Orchestration Framework (SMO) (102). Thereafter, the Service Management and Orchestration Framework (SMO) (102), at step 29 through the O1 interface, sends a CM message with nRPCI and nRTCI changes to the involved E2 nodes (110). At step 30, in response, the E2 node (110) shares CM status with the Service Management and Orchestration Framework (SMO) (102) via the O1 interface.

At step 31 and at step 32, the CM status is further transmitted to the Non-Real Time RAN Intelligent Controller (Non-RT-RIC) (106) from the Service Management and Orchestration Framework (SMO) (102) and to the rApp (104) from the Non-Real Time RAN Intelligent Controller (Non-RT-RIC) (106) respectively.

Lastly, at step 33 and step 34, the rApp (104) sends the updated configuration to the database (114) via the Non-Real Time RAN Intelligent Controller (Non-RT-RIC) (106). Accordingly, the database (114) stores the updated configuration of the cells.

In accordance with an embodiment of the present disclosure, PCI assignment and reassignment techniques of method 200B for PCI (re-)assignment optimization are mentioned in the above steps. Particularly, the PCI (re-)assignment optimization is done by implementing the PCI assignment and reassignment techniques in the rApp (104) in the Non-RT-RIC/SMO. The optimal PCI assignment occurs both at the time of a cell activation or cell topology/configuration change and upon receiving the FM due to the PCI collision and/or PCI confusion. Moreover, the technique of PCI assignment and reassignment is executed by the rApp (104) hosted by the Non-Real Time RAN Intelligent Controller (Non-RT-RIC) (106) in the Open-Radio Access Network (O-RAN) (100). Further, the PCI assignment and reassignment techniques may be implemented using complete (re-)assignment and/or fault management induced local re-assignment.

In accordance with an embodiment of the present disclosure, the PCI (re-)assignment technique may take one or more inputs such as the FM 202, cell addition (single or multiple) 204 or any other neighbour relations. Based on the FM 202 input, a cluster K around a cell causing the FM is identified at 210. Similarly, on the basis of cell addition (single or multiple) 204 input, the cluster K is set around the cell being added at 212. Simultaneously, cluster K = Ω (Set of all cells) is set at 208 if any full PCI (re-)assignment 206 is performed previously. Based on the cluster K = Ω, unique PCIs are assigned to first M cells from the cluster K and X = M is set at 214, where X = # of unique PCIs assigned and M = # of "seed" cells (parameter). Later, next random cell for PCI assignment from the cluster K is considered at 216, based on the identified cluster K around the cell causing the FM 210, set cluster K around the cell being added 212 and assigned unique PCIs and X=M 214, for which n = 0 and N = ceiling(α*X) are set at 218, where n = Counter, N = Number of PCI reuse attempts and α = PCI reuse fraction (parameter). The counter n is increased and a PCI already used (without resampling) is randomly picked at 220. The PCI (re-)assignment technique further determines whether there is a PCI conflict at 224.

In accordance with an embodiment of the present disclosure, in case of the PCI conflict, the PCI (re-)assignment technique determines whether n ≥ N at 222. If n ≥ N, then a new unique PCI is assigned and X is updated at 230. Further, the PCI (re-)assignment technique determines at 232 if there are more cells for PCI assignment.

In accordance with one embodiment of the present disclosure, if the determination is yes, then the PCI (re-)assignment technique returns to step 216 for PCI assignment. The loop will be continued till there is no cell left for PCI assignment. On the other hand

In accordance with another embodiment of the present disclosure, if the determination is no, and there are no further cells for PCI assignment, the PCI (re-)assignment technique ends at 234. If N ≥ n, then the PCI (re-)assignment technique returns to step 220.

In accordance with an embodiment of the present disclosure, if there is no PCI conflict, the PCI (re-)assignment technique determines at 226 if there are more cells for PCI assignment. If determination is yes, then PCI (re-)assignment technique returns to step 216 for PCI assignment. The loop will be continued till there is no cell left for PCI assignment. And if determination is no, and there are no further cells for PCI assignment, the PCI (re-)assignment technique ends at 228.

Conclusively, the PCI (re-)assignment technique iteratively assigns PCIs to the next neighbour-set such that a) specified constraints (related to collision, confusion and modulo 3/30 non-overlap between neighbours, possibly minimum PCI-reuse distance, etc.) are satisfied, b) consider one cell at a time and first try to reuse the PCIs already used and then assigning PCI from equally likely set of the PCIs already used and checking if the constraints are satisfied and repeating the above (without replacement) for at most N (e.g., = αX, where α is a specified parameter in an interval (0, 1)) until the constraints are satisfied. If the constraints are not satisfied after N attempts, the complete (re-) assignment method includes using a new unique PCI and updating X. When a PCI is assigned to each cell without using more than maximum number of unique PCIs available, the procedure has concluded successfully.

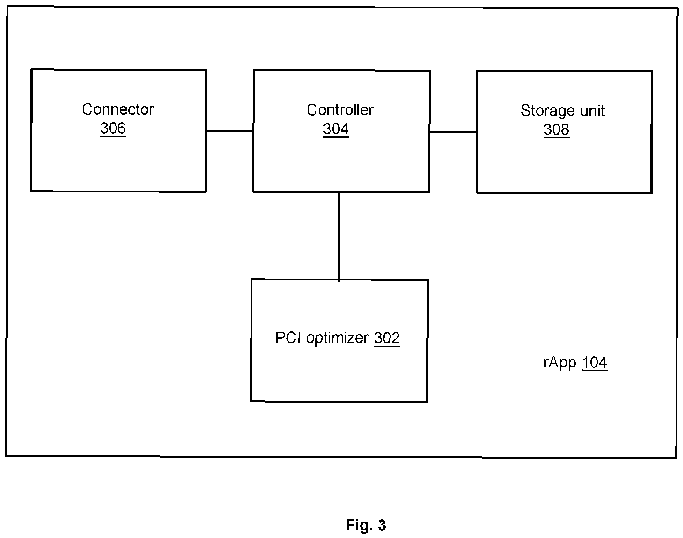

Fig. 3 is a block diagram illustrating various hardware components of an rApp (104) for optimizing the PCI assignment in accordance with an embodiment of the present disclosure. The various hardware elements of the rApp (104) includes a Physical Cell ID (PCI) optimizer (302), at least one processor and/or controller (304), a connector (306) and a storage unit (308). However, the components of the rApp (104) are not limited to the above-described example, and for example, the rApp (104) may include more or fewer components than the illustrated components. In addition, the Physical Cell ID (PCI) optimizer (302), the controller (304), the connector (306) and the storage unit (308) may be implemented in the form of a single chip.

In particular, the Physical Cell ID (PCI) optimizer (302) deploys the optimization service in the rApp (104) and may register the optimization service as a PCI-rApp within the Service Management and Orchestration Framework (SMO) (102). The rApp (104) is in connection with the Non-Real Time RAN Intelligent Controller (Non-RT-RIC) (106) through the interface, such as the R1 interface. Thereafter, the Physical Cell ID (PCI) optimizer (302) utilizes the complete (re-) assignment and/or the fault management induced local re-assignment techniques as explained above. Moreover, the Physical Cell ID (PCI) optimizer (302) assigns a listing of unique predefined PCIs (Physical Cell IDs) to operating cells (interchangeably referred as cells, a plurality of cells or a plurality of operating cells) of a selected range after satisfying one or more constraints. The operating cells have neighbour relations, i.e., for a particular operating cell, a set of operating cells are its neighbours. Further, the Physical Cell ID (PCI) optimizer (302) assigns or concludes a successful status of the procedure, if the assignment of PCI to each operating cell completes without using more than the listing of unique predefined PCIs.

In accordance with an embodiment of the present disclosure, if any fault is detected or notified from any of the selected range, then the Physical Cell ID (PCI) optimizer (302) identifies a cluster of operating cells around an operating cell generating a fault message and re-assigns the listing of unique predefined PCIs to the cluster of operating cells, representing a faulty cluster, based on the one or more constraints. The one or more constraints may also be termed as predefined or specified constraints. In particular, the or more constraints may be but not limited to a collision, confusion, and modulo 3/30 non-overlap between neighbours, and possibly minimum PCI-reuse distance, for example.

Additionally, the Physical Cell ID (PCI) optimizer (302) performs all the tasks of the rApp (104) as explained in Fig. 2A. Some of the example tasks are that the rApp (104) consumes network data (CM notification of new cell deployment or neighbour relation change, FM about PCI conflict(s) and PM) and also determines the PCI for newly deployed cell or PCI changes to resolve flagged PCI conflicts.

In accordance with an embodiment of the present disclosure, the controller (304) controls a series of processes for the rApp (104) operate according to the description described above. And the connector (306) is a device that connects the rApp (104) with other elements/components and may perform message transmission and reception.

In an exemplary example, the controller (304)may transmit/receive the information through the connector (306). Alternatively, there may be a plurality of controllers (304), and the controller (304) may perform a component control operation of the rApp (104) by executing a program stored in the storage unit (308).

The storage unit (308) stores programs and data necessary for the operation of the rApp (104). In particular, the storage unit (308) is composed of a storage medium such as read only memory (ROM), random access memory (RAM), hard disk, compact disc ROM (CD-ROM), and digital versatile disc (DVD), or a combination of storage media. Moreover, there may be a plurality of storage units (308).

In another implementation of the present disclosure, the storage unit (308) may include the database (114).

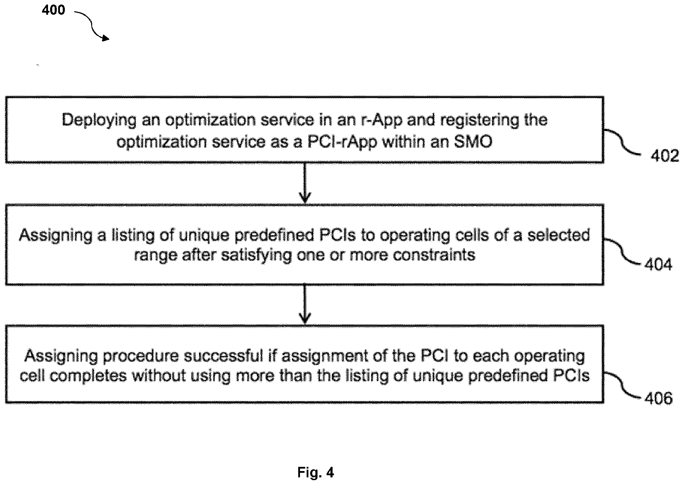

FIG. 4 is a flowchart 400 illustrating a method for optimizing the PCI assignment in accordance with and embodiment of the present disclosure. The method starts at step 402 and proceeds to step 404 and 406.

At step 402, the optimization service is deployed in the rApp 104 and the optimization service is registered as the PCI-rApp within the Service Management and Orchestration Framework (SMO) (102). Particularly, the rApp (104) is in connection with the Non-Real Time RAN Intelligent Controller (Non-RT-RIC) (106) through the interface, such as the R1 interface.

At step 404, the listing of unique predefined PCIs (Physical Cell IDs) is assigned to the operating cells of the selected range after satisfying the one or more constraints. In particular, the operating cells have neighbour relations, i.e., for a particular operating cell, a set of operating cells are its neighbours.

At step 406, an indication is made if the assignment of the PCI to each operating cell is completed without using more than the listing of unique predefined PCIs and the procedure is successfully concluded.

It may be noted that the flowchart 400 is explained to have above stated process steps; however, those skilled in the art would appreciate that the flowchart 400 may have more/less number of process steps which may enable all the above stated implementations of the present disclosure. The various actions, acts, blocks, steps, or the like in the flow chart and sequence diagrams may be performed in the order presented, in a different order or simultaneously. Further, in some implementations, some of the actions, acts, blocks, steps, or the like may be omitted, added, modified, skipped, or the like without departing from the scope of the present disclosure.

Overall, the present disclosure advantageously provides a PCI (re-) assignment technique which is scalable and optimizes publicly available and/or published algorithms. In particular, the PCI (re-) assignment technique avoids getting trapped in local minima and is robust, e.g. The FM is resolvable with a minimum number of PCI changes. Moreover, the present disclosure enables using O1 interface or O1-equivalent interface for the Open-Radio Access Network (O-RAN) (100) or Non-O-RAN respectively to get data updates for network configuration without using the Near-Real Time RAN Intelligent Controller (Near-RT-RIC) (108).

A person of ordinary skill in the art may be aware that, in combination with the examples described in the embodiments disclosed in this specification, units and algorithm steps may be implemented by electronic hardware, computer software, or a combination thereof.

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varyin*Comparetti* g ways for each particular application, but such implementation decisions should not be interpreted as causing a departure from the scope of the disclosure.The embodiments disclosed herein can be implemented using at least one software program running on at least one hardware device and performing network management functions to control the elements. The results of the disclosed methods may be stored in any type of computer data repository, such as relational databases and flat file systems that use volatile and/or nonvolatile memory (e.g., magnetic disk storage, optical storage, EEPROM and/or solid-state RAM).

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present disclosure and the features in the embodiments may be mutually combined.

The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

## Claims

1. A method for optimizing Physical Cell ID (PCI) assignment in an Open Radio Access Network (O-RAN) (100), **characterized in that** steps of:
deploying an optimization service in an rApp (104) and registering the optimization service as a PCI-rApp within a Service Management and Orchestration Framework (SMO) (102); and
assigning a listing of unique predefined PCIs (Physical Cell IDs) to operating cells of a selected range after satisfying one or more constraints, wherein the operating cells have neighbour relations; and
determining an assigning procedure successful for an assignment of the PCI to each operating cell completes without using more than the listing of unique predefined PCIs;
wherein the rApp (104) is in connection with a Non-Real Time RAN Intelligent Controller (Non-RT-RIC) (106) through an interface.

2. The method as claimed in claim 1, wherein when any fault is detected or notified from any of the selected range the rApp (104):
identifies a cluster of operating cells around an operating cell generating a fault message; and
re-assigns the listing of unique predefined PCIs to the cluster of operating cells, representing a faulty cluster, based on the one or more constraints; wherein the one or more constraints are a collision, a confusion, and a modulo 3/30 non-overlap between neighbours, and a minimum PCI-reuse distance.

3. The method as claimed in claim 1 or 2, wherein the method comprises getting data updates, fault supervision and network configuration via an O1 interface for the Open Radio Access Network (O-RAN) (100).

4. The method as claimed in any preceding claim, wherein the O1 interface links the Service Management and Orchestration Framework (SMO) (102) to an E2 node (110).

5. The method as claimed in any preceding claim, wherein the E2 node (110) creates a measurement job and the Service Management and Orchestration Framework (SMO) (102) subscribes to at least one of a Fault management (FM), a Configuration management (CM), a Performance management (PM) data from the E2 node (110).

6. The method as claimed in any preceding claim, wherein the E2 node (110) comprises an Open-Distributed Unit (O-DU) and an Open-Centralized Unit (O-CU).

7. The method as claimed in any preceding claim, wherein the O1 interface for the Open Radio Access Network (O-RAN) (100) is operably configured to get data updates, fault supervision and network configuration, wherein the O1 interface links the Service Management and Orchestration Framework (SMO) (102) to an O1 interface adapter which links to an E2 node (110).

8. The method as claimed in any preceding claim, wherein the E2 node (110) is configured to create a measurement job and the Service Management and Orchestration Framework (SMO) (102) subscribe is configured to at least one of a Fault management (FM), a Configuration management (CM), a Performance management (PM) data from the E2 node (110).

9. The method as claimed in any preceding claim, wherein the rApp (104) consumes network data having CM notification of new cell deployment or neighbour relation change, FM about PCI conflict(s) and PM.

10. The method as claimed in any preceding claim, wherein the rApp (104) determines a PCI for newly deployed cell or PCI changes to resolve flagged PCI conflicts.

11. The method as claimed in any preceding claim, wherein the E2 node (110) executes configuration and sends CM change confirmation to the rApp (104).

12. The method as claimed in any preceding claim, wherein the rApp (104) comprises:
a Physical Cell ID (PCI) optimizer (302) configured to deploy an optimization service in the rApp (104) and register the optimization service as a PCI-rApp within the Service Management and Orchestration Framework (SMO) (102);
at least one processor and/or controller (304) configured to control a series of processes for the rApp (104);
a connector (306) configured to connect the rApp (104) with other elements to perform message transmission and reception; and
a storage unit (308) configured to store one or more programs and data for operation of the rApp (104).

13. The method as claimed in any preceding claim, wherein the rApp (104) is configured to determine a PCI for newly deployed cell or PCI changes to resolve flagged PCI conflicts.

14. The method as claimed in any preceding claim, wherein the E2 node (110) is configured to execute a configuration change and send CM change confirmation to the rApp (104).

15. The method as claimed in any preceding claim, wherein the PCI assignment and/or reassignment is executed by the rApp (104) hosted by the Non-Real Time RAN Intelligent Controller (Non-RT-RIC) (106) in the Open Radio Access Network (O-RAN) (100) by taking one or more inputs selected from the FM, cell addition or any other neighbour relation.
